Europäisches Patentamt

European Patent Office

Office européen des brevets

(19)

(11) **EP 1 010 097 B1**

(12) **EUROPÄISCHE PATENTSCHRIFT**

(45) Veröffentlichungstag und Bekanntmachung des Hinweises auf die Patenterteilung:
**10.04.2002   Patentblatt 2002/15**

(51) Int Cl.[7]: **G06F 17/00**

(21) Anmeldenummer: **98904008.4**

(22) Anmeldetag: **07.01.1998**

(86) Internationale Anmeldenummer:
**PCT/DE98/00031**

(87) Internationale Veröffentlichungsnummer:
**WO 98/32078 (23.07.1998 Gazette 1998/29)**

(54) **VERFAHREN ZUR DETEKTION VON SYNCHRONIZITÄT ZWISCHEN MEHREREN DIGITALEN MESSREIHEN MIT HILFE EINES RECHNERS**

METHOD FOR DETECTING SYNCHRONISM AMONG SEVERAL DIGITAL MEASUREMENT SERIES CARRIED OUT WITH A CALCULATOR

PROCEDE DE DETECTION DE SYNCHRONISME ENTRE PLUSIEURS SERIES DE MESURES NUMERIQUES EFFECTUEES AVEC UNE CALCULATRICE

(84) Benannte Vertragsstaaten:
**AT DE GB NL**

(30) Priorität: **21.01.1997   DE 19701932**

(43) Veröffentlichungstag der Anmeldung:
**21.06.2000   Patentblatt 2000/25**

(73) Patentinhaber:
• **SIEMENS AKTIENGESELLSCHAFT**
  **80333 München (DE)**
• **Max-Planck-Gesellschaft zur Förderung der Wissenschaften e.V.**
  **80539 München (DE)**

(72) Erfinder:
• **DECO, Gustavo**
  **D-80636 München (DE)**
• **MARTIGNON, Laura**
  **D-14167 Berlin (DE)**

(74) Vertreter: **Berg, Peter**
  **Siemens AG**
  **Postfach 22 16 34**
  **80506 München (DE)**

(56) Entgegenhaltungen:
• **DECO G ET AL: "Training data selection by detecting predictability in non-stationary time series by a surrogate-cumulant based approach" PROCEEDINGS INTERNATIONAL WORKSHOP ON NEURAL NETWORKS FOR IDENTIFICATION, CONTROL, ROBOTICS, AND SIGNAL/IMAGE PROCESSING (CAT. NO.96TB100029), VENICE, ITALY,21-23 AUG 1996, ISBN 0-8186-7456-3, 1996, LOS ALAMITOS, CA, USA, IEEE COMPUT. SOC. PRESS, USA, Seiten 11-19, XP000676844**
• **MARTIGNON L ET AL: "Learning exact patterns of quasi-synchronization among spiking neurons from data on multi-unit recordings" PROCEEDINGS OF THE 1996 CONFERENCE, ADVANCES IN NEURAL INFORMATION PROCESSING SYSTEMS 9. PROCEEDINGS OF THE 1996 CONFERENCE, DENVER, CO, USA, 2-5 DEC. 1996, ISBN 0-262-10065-7, 1997, LONDON, UK, MIT PRESS, UK, Seiten 76-82, XP002064968**
• **GUO Q ET AL: "ZONE METHOD - A NEW APPROACH TO BRAIN NONLINEAR DYNAMICS" PROCEEDINGS OF THE ANNUAL INTERNATIONAL CONFERENCE OF THE IEEE ENGINEERING IN MEDICINE AND BIOLOGY SOCIETY, BALTIMORE, NOV. 3 - 6, 1994, Bd. VOL. 2, Nr. VOL. 16, 3.November 1994, SHEPPARD N F;EDEN M; KANTOR G (EDS ), Seite 1322/1323 XP000552599**

- **MARTIGNON L ET AL: "Detecting higher-order interactions among the spiking events in a group of neurons" BIOLOGICAL CYBERNETICS, JUNE 1995, GERMANY, Bd. 73, Nr. 1, ISSN 0340-1200, Seiten 69-81, XP000525994**

- **DECO G ET AL: "Nonparametric data selection for improvement of parametric neural learning: a cumulant-surrogate method" INTERNATIONAL CONFERENCE ON ARTIFICIAL NEURAL NETWORKS PROCEEDINGS - ICANN 96. BOCHUM, GERMANY, 16-19 JULY 1996, ISBN 3-540-61510-5, 1996, BERLIN, GERMANY, SPRINGER-VERLAG, GERMANY, Seiten 121-126, XP000676842**

**Beschreibung**

Die Erfindung betrifft ein Verfahren zur Detektion von Synchronizität zwischen mehreren digitalen Meßreihen mit Hilfe eines Rechners.

Verfügt man über durch Zeitreihen gegebene Meßdaten, die beispielsweise von unterschiedlichen Neuronen stammen, so ist von großem Interesse, mit welcher Wahrscheinlichkeit Synchronizität zwischen den unterschiedlich möglichen Kombinationen der binären Signale der Zeitreihen auftritt.

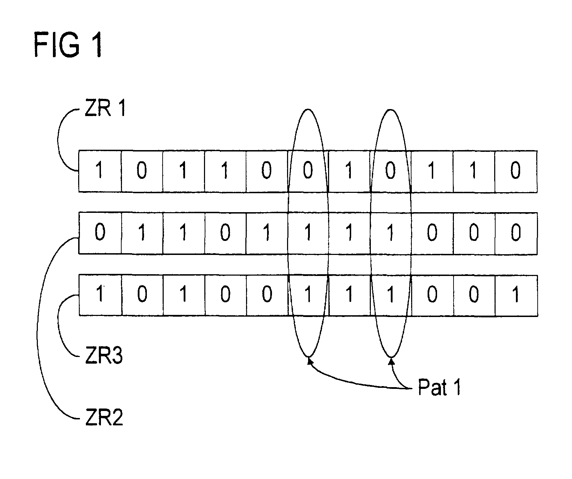

Zur Veranschaulichung diene Figur 1. Hier sind beispielhaft drei Zeitreihen ZR1, ZR2 und ZR3 angeführt. Diese Zeitreihen können beispielsweise von unterschiedlichen Neuronen stammen oder allgemein beliebige binäre Frequenzdaten darstellen. Als Ordnung O werde definiert, wie viele Zeitreihen für die Synchronizität berücksichtigt werden. In Figur 1 ist die Ordnung O gleich 3. Es soll also für alle möglichen Kombinationen von den im Beispiel vorkommenden binären Gruppierungen der Ordnung 3 jeweils eine Wahrscheinlichkeit für Synchronizität angegeben werden. So ist in Figur 1 beispielhaft eine Kombination Patl (011) aufgeführt, die zweimal vorkommt.

Aus dem Dokument D1 (L. Martignon et al., "Learning exact patterns of quasi-synchronization among spiking neurons from data on multi-unit recordings", Proceedings of the 1996 conference, advances in neural Information processing systems 9. Proceedings of the 1996 conference, Denver, CO, USA, 2-5 Dec. 1996; ISNB 0-262-10065-7, 1997, London, UK, MIT Press, UK, Seiten 76-82) sind Verfahren zur Ermittlung von Korrelationen der Feuerzeitpunkte von Neuronen bekannt. Es werden zwei Verfahren beschrieben, um die Existenz oder die Abwesenheit von Korrelationen zu bestimmen, ein Frequenzansatz und ein Ansatz nach Bayes. Bei beiden Verfahren wird eine Entropie von Unterkombinationen als ein Maß für die Existenz oder die Abwesenheit von Korrelationen und von Synchronizität herangezogen.

Aus dem Dokument D2 (G. Deco et al., "Training data selection by detecting predictability in non-stationary time series by a surrogate-culmulant based approach", Proceedings international workshop on neural networks for identification, control, robotics and signal/image processing (Cat. No. 96TB100029), Venice, Italy, 21-23 Aug. 1996, ISBN 0-8186-7456-3, 1996, Los Alamitos, CA, USA, IEEE Comput. Soc. Press, USA, Seiten 11-19) ist ein nichtparametrischer, auf Kumulanten basierender Ansatz zur Bestimmung linearer und nicht linearer Abhängigkeiten in nichtstationären Zeitreihen bekannt.

Die der Erfindung zugrundeliegende Aufgabe besteht darin, ein Verfahren zur Detektion von Synchronizität zwischen mehreren digitalen Meßreihen zu schaffen, das sich insbesondere zur Detektion neuronaler Kodierungsmuster im Gehirn eignet.

Diese Aufgabe wird durch das Verfahren gemäß den Merkmalen des Patentanspruchs 1 gelöst.

Das Verfahren formuliert einen nichtparametrischen statistischen Ansatz zur Detektion von Synchronizität zwischen mehreren digitalen Meßreihen. Konkret kann es sich dabei um das synchrone Feuern mehrerer Neuronen handeln. Die Synchronizität wird durch die Messung einer diskriminierenden Signifikanz detektiert, die eine Nullhypothese des unabhängigen Feuerns mit einer Surrogat-Methode testet. Die verwendeten Surrogat-Daten entsprechen der Nullhypothese einer Verteilung P*, deren Randverteilung niedriger Ordnung mit der Randverteilung der Ursprungsverteilung P übereinstimmt und die zusätzliche Bedingungen "Connected Cumulant" [1] gleich null erfüllt. Die Ablehnung der Nullhypothese basiert auf der Berechnung der diskriminierenden Statistik $D_0$ des ursprünglichen Datensatzes und der diskriminierenden Statistik $D_{Si}$ des i-ten Surrogat-Datensatzes, der unter Annahme der Nullhypothese erzeugt wurde.

Um beispielsweise das synchrone Feuern einer Anzahl von durch die Ordnung O vorgegebenen Neuronen zu testen, sollen unterschiedliche Nullhypothesen abgelehnt werden. Für jede Teilmenge A von Neuronen wird ermittelt, ob das Feuern der Neuronen in der Teilmenge A gleichzeitig geschieht. Die entsprechende diskriminierende Statistik D(A) ist gegeben durch:

$$D(A) = \Theta_A = \sum_{B \subset A} (-1)^{|A-B|} \cdot \ln P(\dot{\chi}_B) \qquad (1),$$

wobei

$\Theta_A$ ein zu A gehörender Koeffizient in der logarithmischen Verteilung und

$\chi_B$ eine Konfiguration mit '1' in der Komponenten in B und '0' sonst ist.

Ist die Bedingung (1) gleich null, so ist das Feuern des Neurons in A nicht synchron.

Wie oben erwähnt, kann eine beispielhafte Weiterbildung des erfindungsgemäßen Verfahrens ein den Meßreihen zugrundeliegendes Feuern mehrerer Neuronen, deren Anzahl die Ordnung O bestimmt, sein. Somit kann mit dem erfindungsgemäßen Verfahren das schwierige Problem der Detektion von neuronalen Kodierungsmustern im Gehirn gelöst werden.

Eine Weiterbildung des erfindungsgemäßen Verfahren ergibt sich aus dem abhängigen Anspruch.

Die Erfindung wird anhand eines Ausführungsbeispiels, das in den Figuren dargestellt ist, weiter erläutert.

Es zeigen

Figur 1     beispielhaft Meßdaten verschiedener Zeitreihen,
Figur 2     ein Blockdiagramm, das die Schritte des erfindungsgemäßen Verfahrens darstellt.

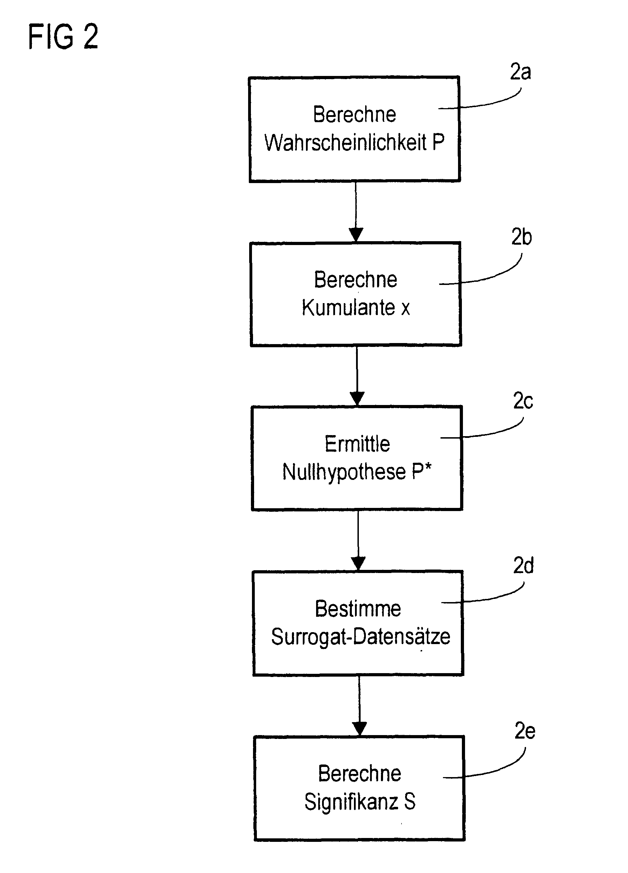

In Figur 1 sind beispielhaft drei unterschiedliche Zeitreihen ZR1, ZR2 und ZR3 angegeben. Allgemein ist die Ordnung O bestimmt durch die maximal vorkommende Anzahl von '1'. Bezogen auf ein Anwendungsbeispiel kann man sich die '1' vorstellen als das Feuern eines Neurons. Allgemein gibt es $2^O$ unterschiedliche Kombinationen bei O binären Meßreihen. Im Beispiel ist die Ordnung gleich drei und es gibt acht verschiedene binäre Kombinationen. Dieses in Figur 1 dargestellte Beispiel wird zur Erklärung des erfindungsgemäßen Verfahrens in Figur 2 aufgegriffen.

Figur 2 stellt ein Blockdiagramm dar, das die einzelnen Schritte des erfindungsgemäßen Verfahrens enthält. Anhand verschiedener Meßreihen, die von Neuronen stammen können, wird eine reale Auftrittswahrscheinlichkeit für jede verschiedene binäre Kombination errechnet (siehe Schritt 2a). Diese Wahrscheinlichkeit P ergibt sich zu

$$P_j = \frac{K_j}{S(K)} \ \forall j \tag{2},$$

wobei

j     jeweils eine mögliche binäre Kombination,
$K_j$     eine Häufigkeit des Auftretens einer möglichen binären Kombination j der betrachteten Ordnung und
S(K)     eine Anzahl der Werte der Meßreihe

bezeichnen.

Bezogen auf das in Figur 1 dargestellte Beispiel bedeutet dies die Berechnung der Wahrscheinlichkeit P für alle möglichen binären Kombinationen der entsprechenden Ordnung, also für die Tripel

$$\{(000), (001), (010), (011), (100), (101), (110), (111)\} \tag{3}.$$

Die diskriminierende Statistik (Teststatistik) ist durch die Kumulanten gegeben [1] (siehe Schritt 2b). Die Konstruktion der Nullhypothese P*, für wie in Figur 1 angegeben drei Neuronen, ist gegeben durch (Schritt 2c):

$$x = cum3() \ (\text{Kumulante dritter Ordnung}) \tag{4}.$$

$$P^*(111) = p(111)-x \tag{5a}$$

$$P^*(100) = p(100)-x \tag{5b}$$

$$P^*(010) = p(010)-x \tag{5c}$$

$$P^*(001) = p(001)-x \tag{5d}$$

$$P^*(110) = p(110)+x \tag{5e}$$

$$P^*(101) = p(101)+x \tag{5f}$$

$$P^*(011) = p(011)+x \tag{5g}$$

$$P^*(000) = 1-p^*(111)-p^*(100)-p^*(010) -$$

$$-p^*(001)-p^*(110)-p^*(101)-p^*(011) \tag{5h},$$

wobei für eine ungerade Anzahl von '1' das Vorzeichen vor der Kumulante '-', sonst '+', ist. Im allgemeinen kann diese Vorschrift auch angegeben werden durch

$$P^*(1_A) = P(1_A) + (-1)^{|A|} \cdot x \tag{6},$$

mit

$$1_A(i) = \begin{cases} 0 & \text{wenn } i \notin A \\ 1 & \text{wenn } i \in A \end{cases} \tag{7},$$

wobei

x      eine Kumulante der Ordnung der betrachteten Menge von Meßreihen,

A      eine Menge, die die Anordnung von binären Daten in einem Tupel, dessen Ordnung bestimmt ist durch die maximal vorkommende Anzahl von '1' und

$|A|$      die Mächtigkeit der Menge A

bezeichnen.

Anhand dieser Nullhypothese P* werden Surrogat-Datensätze, also beliebige Instanzen der Vorschrift der Nullhypothese, per Zufallsgenerator ermittelt (Figur 2, Schritt 2d). Anders ausgedrückt werden Meßreihen "gewürfelt", wobei der "Würfel" für jede mögliche Kombination die durch die Nullhypothese festgelegte Auftrittswahrscheinlichkeit hat.

Zur Entscheidung, ob Synchronizität vorliegt oder nicht, wird eine Signifikanz S bestimmt (Schritt 2e):

$$S = \frac{|D_0 - \mu_S|}{\sigma_s} \tag{8}$$

mit

$$\mu_S = \frac{1}{N} \cdot \sum_{i=1}^{N} D_{S_i} \tag{9a}$$

und

$$\sigma_S = \sqrt{\frac{1}{N} \cdot \sum_{i=1}^{N} \left( D_{S_i} - \mu_S \right)^2} \qquad\qquad (9b)$$

wobei

$D_0$      eine diskriminierende Statistik der Meßreihe,

$D_{Si}$      die diskriminierende Statistik eines i-ten Surrogat-Datensatzes, der von der Nullhypothese erzeugt wurde,

$\mu_S$      einen geschätzten Mittelwert der diskriminierenden Statistik des Surrogat-Datensatzes,

$\sigma_S$      eine geschätzte Varianz der diskriminierenden Statistik des Surrogat-Datensatzes und

$N$      eine Länge des Surrogat-Datensatzes

bezeichnen.

Eine vorteilhafte Anwendung des erfindungsgemäßen Verfahrens besteht, wie oben erwähnt, in der Verwendung von Meßreihen, die dem Feuern realer Neuronen zugrunde liegen. Das Verfahren kann gleichermaßen auf beliebige binäre Frequenzdaten angewandt werden.

Im Rahmen dieses Dokuments wurde folgende Veröffentlichung zitiert:

[1]      J.J.Binney et al.: The Theory of Critical Phenomena. An introduction to the renormalization group. Oxford University Press 1992, S.40-47, ISBN 0 19 851393 3 (Phk)

**Patentansprüche**

1.    Verfahren zur Detektion von Synchronizität zwischen mehreren digitalen zeitreihen von Meßdaten, die von physikalischen signalen stammen, mit Hilfe eines Rechners,

   a) bei dem eine Ordnung die Anzahl der berücksichtigten Meßreihen angibt, die auf Synchronizität hin untersucht werden,
   b) bei dem eine erste Wahrscheinlichkeit (Pj)für jede verschiedene binäre Kombinationen Kj berechnet wird gemäß

   $$Pj = \frac{Kj}{S(K)} \ \forall\ j,$$

   wobei

   $j$      jeweils eine mögliche binäre Kombination,
   $K_j$      eine Häufigkeit des Auftretens einer möglichen binären Kombination j der betrachteten Ordnung,
   $S(K)$      eine Anzahl der Werte der Meßreihe

   bezeichnen,
   c) bei dem Kumulanten für eine diskriminierende Statistik berechnet werden,
   d) bei dem eine Nullhypothese (P*) derart angenommen wird, daß gilt

   $$P^*(1_A) = P(1_A) + (-1)^{|A|}$$

   mit

   $$1_A(i) = \begin{cases} 0 \ wenn \ i \notin A \\ 1 \ wenn \ i \in A \end{cases}$$

wobei

x      eine Kumulante der Ordnung der betrachteten Menge von Meßreihen,

A      eine Menge, die die Anordnung von binären Daten in einem Tupel, dessen Ordnung bestimmt ist durch die maximal vorkommende Anzahl von '1' und

|A|      die Mächtigkeit der Menge A

bezeichnen,

e) bei dem Surrogat-Datensätze, also beliebige Instanzen der Vorschrift der Nullhypothese (P*) ermittelt werden,

f) bei dem zur Entscheidung, ob Synchronizität vorliegt oder nicht, eine Signifikanz (S) bestimmt wird gemäß

$$S = \frac{D_0 - \mu_S|}{\sigma_s}$$

mit

$$\mu_S = \frac{1}{N} \cdot \sum_{i=1}^{N} D_{S_i} \quad \text{und} \quad \sigma_S = \sqrt{\frac{1}{N} \bullet \sum_{i=1}^{N} \left( D_{S_i} - \mu_S \right)^2}$$

wobei

$D_0$      eine diskriminierende Statistik der Meßreihe,

$Ds_i$      die diskriminierende Statistik eines i-ten Surrogat-Datensatzes, der von der Nullhypothese erzeugt wurde,

$\mu_S$      einen geschätzten Mittelwert der diskriminierenden Statistik des Surrogat-Datensatzes,

$\sigma_s$      eine geschätzte Varianz der diskriminierenden Statistik des Surrogat-Datensatzes und

N      eine Länge des Surrogat-Datensatzes

bezeichnen.

2.    Verfahren nach Anspruch 1,
bei dem als Meßdaten Zeitreihen von unterschiedlichen Neuronen verwendet werden.

**Claims**

1.    Method for detecting synchronicity between several digital time series of measurement data which originate from physical signals, with the aid of a computer,

     a) in which an order indicates the number of measurement series taken into account which are to be examined for synchronicity,

     b) in which a first probability (Pj) is calculated for each different binary combination Kj in accordance with

$$Pj = \frac{Kj}{S(K)} \forall\ j,$$

     j      respectively denoting a possible binary combination,

     $K_j$      denoting a frequency of the occurrence of a possible binary combination j of the order in question,

     S(K)      denoting a number of the values in the measurement series,

     c) in which cumulants for a discriminating statistic are calculated,

     d) in which a null hypothesis (P*) is made such that

**EP 1 010 097 B1**

$$P^*(1_A) = P(1_A) + (-1)^{|A|}$$

with

$$1_{A(i)} = \begin{cases} 0 \ if \ i \notin A \\ 1 \ if \ i \in A \end{cases}$$

x    denoting a cumulant of the order of the set of measurement series in question,

A    denoting a set which denotes the arrangement of binary data in a tuple whose order is determined by the maximum number of "is" appearing, and

|A|    denoting the power of the set A

e) in which surrogate data records, i.e. arbitrary instances of the null hypothesis (P*) condition, are determined,

f) in which the decision as to whether or not there is synchronicity is determined by a significance (S) in accordance with

$$S = \frac{D_0 - \mu_S|}{\sigma_s}$$

$$\text{with } \mu_S = \frac{1}{N} \cdot \sum_{i=1}^{N} D_{S_i} \quad \text{and} \quad \sigma_S = \sqrt{\frac{1}{N}} \bullet \sum_{i=1}^{N} \left( D_{S_i} - \mu_S \right)^2$$

$D_0$    denoting a discriminating statistic of the measurement series,

$D_{S_i}$    denoting the discriminating statistic of an i-th surrogate data record which has been produced by the null hypothesis,

$\mu_S$    denoting an estimated mean of the discriminating statistic of the surrogate data record,

$\sigma_S$    denoting an estimated variance of the discriminating statistic of the surrogate data record and

N    denoting a length of the surrogate data record.

2. Method according to Claim 1, in which time series of different neurons are used as measurement data.

**Revendications**

1. Procédé pour la détection de synchronisme entre plusieurs séries temporelles numériques de données mesurées, qui proviennent de signaux physiques, à l'aide d'un ordinateur,

a) dans lequel un ordre indique le nombre des séries de mesures prises en compte qui sont examinées du point de vue du synchronisme,

b) dans lequel on calcule une première probabilité (Pj) pour toutes les combinaisons binaires Kj différentes selon

$$Pj = \frac{Kj}{S(K)} \ \forall j,$$

avec

j :    respectivement une combinaison binaire possible,

Kj:      une fréquence de l'apparition d'une combinaison binaire possible j de l'ordre considéré,

S(K):   un nombre des valeurs de la série de mesures,

c) dans lequel on calcule des cumulants pour une statistique discriminante,

d) dans lequel on suppose une hypothèse nulle (P*) de manière à avoir

$$P^*(1_A) = P(1_A) + (-1)^{|A|} \cdot X$$

avec

$$1_A(i) = \begin{cases} 0 & \text{si } i \notin A \\ 1 & \text{si } i \in A \end{cases}$$

x :     un cumulant de l'ordre de l'ensemble considéré de séries de mesures,

A:      un ensemble qui correspond à l'agencement de données binaires dans un n-uplet dont l'ordre est déterminé par le nombre maximal possible de '1', et

|A|:    le cardinal de l'ensemble A,

e) dans lequel on détermine des blocs de données de substitution, c'est-à-dire des instances quelconques de la règle de l'hypothèse nulle (P*),

f) dans lequel, pour décider s'il y a synchronisme ou non, on détermine une signification (S) selon

$$S = \frac{|D_0 - \mu_S|}{\sigma_s}$$

avec

$$\mu_S = \frac{1}{N} \cdot \sum_{i=1}^{N} D_{S_i} \quad \text{et } \sigma_S = \sqrt{\frac{1}{N} \cdot \sum_{i=1}^{N} (D_{S_i} - \mu_S)^2}$$

$D_0$ :      une statistique discriminante de la série de mesures,

$D_{S_i}$ :   la statistique discriminante d'un i-ème bloc de données de substitution qui a été produit par l'hypothèse nulle,

$\mu_S$:     une valeur moyenne estimée de la statistique discriminante du bloc de données de substitution,

$\sigma_S$:   une variance estimée de la statistique discriminante du bloc de données de substitution, et

N :     une longueur du bloc de données de substitution.

**2.** Procédé selon la revendication 1, dans lequel on utilise comme données de mesure des séries temporelles de différents neurones.

FIG 1

ZR 1

| 1 | 0 | 1 | 1 | 0 | 0 | 1 | 0 | 1 | 1 | 0 |

| 0 | 1 | 1 | 0 | 1 | 1 | 1 | 1 | 0 | 0 | 0 |

| 1 | 0 | 1 | 0 | 0 | 1 | 1 | 1 | 0 | 0 | 1 |

ZR3

ZR2

Pat 1

## FIG 2

```
                                    ┌──────────────────────────┐  2a
                                    │       Berechne           │
                                    │  Wahrscheinlichkeit P    │
                                    └──────────────────────────┘
                                               │
                                               ▼
                                    ┌──────────────────────────┐  2b
                                    │       Berechne           │
                                    │     Kumulante x          │
                                    └──────────────────────────┘
                                               │
                                               ▼
                                    ┌──────────────────────────┐  2c
                                    │       Ermittle           │
                                    │   Nullhypothese P*       │
                                    └──────────────────────────┘
                                               │
                                               ▼
                                    ┌──────────────────────────┐  2d
                                    │       Bestimme           │
                                    │   Surrogat-Datensätze    │
                                    └──────────────────────────┘
                                               │
                                               ▼
                                    ┌──────────────────────────┐  2e
                                    │       Berechne           │
                                    │     Signifikanz S        │
                                    └──────────────────────────┘
```